# EUROPEAN PATENT APPLICATION

(11) **EP 2 575 324 A1**
(43) Date of publication of application: **03.04.2013**
(21) Application number: 11183543.5
(22) Date of filing: 30.09.2011
(51) Int. Cl.: H04L 29/08, H04W 84/18, G01D 21/02

(54) **A distributed operating system for sensor transparency**

(71) Applicant: Deutsche Telekom AG, 53113 Bonn (DE); Technische Universität Berlin, 10623 Berlin (DE)
(72) Inventor: Hui, Pan, 10709 Berlin (DE); Pasztor, Bence, 1011 Budapest (HU)
(74) Representative: Vossius & Partner

(57) **Abstract**

The present invention relates to a method of wireless sensor network management, in particular, focusing on a 'smart home' environment, where the entire home is seen as a single entity with the sensors acting as building blocks of the system. Using these building blocks, complex sensing and control applications can be designed. The system provides the functionalities required by the efficient functioning of the application utilising a system storage and a communication sub-system. The system comprises at least one kernel node managing the network as well as providing storage functionalities. The communication protocol enables neighbouring devices to reliably and efficiently deliver and collect information from the kernel node. The storage system provides a file-system-like interface enabling applications to store and retrieve information. The system manages the underlying infrastructure, hiding the complexity involved in storing and retrieving information, as well as those associated with communication.

## Description

### Technical Field

The invention presents a method for wireless sensor network management, in particular, focusing on a 'smart home' environment, where the entire home is seen as a single entity with the sensors acting as building blocks of the system.

### Background of the invention

As a result of much research, Wireless Sensor Networks (WSNs) are starting to emerge in the real world, as opposed to being "stuck" in lab environments or network simulators. Systems are being deployed to monitor people using mobile phones [23] [15], or medical sensors [16], nature [18] or buildings [5] using static sensors, or animals using collars [11].

Up to now, all sensor network programmers had to deal with the optimisations of networking protocols and operating system to make the most out of every deployment. Years of research have made these protocols energy efficient and reliable enough for application developers to stop worrying about them, and start thinking about higher-level, complex problems. It is desired that the application developers are focused more on the applications, and less on the underlying operations. This is due to the fact that, by not having to spend time "hacking" the Operation System on every single sensor, developers can design more efficient, and perhaps more complex applications on the network.

### Related publications

"Imote2 Sensor board".

"Tmote Sky Sensor board".

A. Baumann, P. Barham, P. E. Dagand, T. Harris, R. Isaacs, S. Peter, T. Roscoe, A. Sch upbach, and A. Singhania. The multikernel: a new OS architecture for scalable multicore systems. In Proceedings of the ACM SIGOPS 22nd symposium on Operating systems principles, SOSP '09, pages 29-44, New York, NY, USA, 2009. ACM.

M. Buettner, G. V. Yee, E. Anderson, and R. Han. X-mac: a short preamble mac protocol for duty-cycled wireless sensor networks. In SenSys '06: Proc. of the 4th Int. Conf. on Embedded Networked Sensor Systems, pages 307-320, New York, NY, USA, 2006. ACM.

M. Ceriotti, L. Mottola, G. P. Picco, A. L. Murphy, S. Guna, M. Corra, M. Pozzi, D. Zonta, and P. Zanon. Monitoring heritage buildings with wireless sensor networks: The Torre Aquila deployment. In IPSN '09: Proceedings of the 2009 International Conference on Information Processing in Sensor Networks, pages 277-288, Washington, DC, USA, 2009. IEEE Computer Society.

J. Crowcroft. Open Distributed Systems. Artech House, Inc., Norwood, MA, USA, 1996.

E. Cuervo, A. Balasubramanian, D.-k. Cho, A. Wolman, S. Saroiu, R. Chandra, and P. Bahl. Maui: making smartphones last longer with code offload. InProceedings of the 8th international conference on Mobile systems, applications, and services, MobiSys ' 10, pages 49-62, New York, NY, USA, 2010. ACM.

A. Dunkels. Rime - a lightweight layered communication stack for sensor networks. In Proceedings of the European Conference on Wireless Sensor Networks (EWSN), Poster/Demo session, Delft, The Netherlands, Jan. 2007.

A. Dunkels, N. Finne, J. Eriksson, and T. Voigt. Run-time dynamic linking for reprogramming wireless sensor networks. In Proceedings of the Fourth ACM Conference on Embedded Networked Sensor Systems (SenSys 2006), Boulder, Colorado, USA, Nov. 2006.

A. Dunkels, F. □Osterlind, N. Tsiftes, and Z. He. Demo Abstract: Software-based Sensor Node Energy Estimation. In Proceedings of the Fifth ACM Conference on Networked Embedded Sensor Systems (SenSys 2007), Sydney, Australia, Nov. 2007.

V. Dyo, S. A. Ellwood, D. W. Macdonald, A. Markham, C. Mascolo, B. Pásztor, S. Scellato, N. Trigoni, R. Wohlers, and K. Yousef. Evolution and sustainability of a wildlife monitoring sensor network. In Proceedings of the 8th ACM Conference on Embedded Networked Sensor Systems, SenSys ' 10, pages 127-140, New York, NY, USA, 2010. ACM.

J. V. Gruenen and J. Rabaey. Content management and replication in the snsp: A distributed service-based os for sensor networks. In IEEE CCNC (Consumer Communications and Networking Conference), pages 655-659, January 2008.

P. Hurni and et. al. A Testbed Management Architecture for Wireless Sensor Network Testbeds (TARWIS). In Proceedings of the 7th European Conference on Wireless Sensor Networks (EWSN), Coimbra, Portugal, 2009.

C. Intanagonwiwat, R. Govindan, D. Estrin, J. Heidemann, and F. Silva. Directed diffusion for wireless sensor networking. IEEE/ACM Trans. Netw., 11(1):2-16, 2003.

N. Lane, E. Miluzzo, H. Lu, D. Peebles, T. Choudhury, and A. Campbell. A survey of mobile phone sensing. IEEE Communications Magazine, 48(9):140-150, September 2010.

K. Lorincz, B.-r. Chen, G. W. Challen, A. R. Chowdhury, S. Patel, P. Bonato, and M. Welsh. Mercury: a wearable sensor network platform for high-fidelity motion analysis. In SenSys '09: Proceedings of the 7th ACM Conference on Embedded Networked Sensor Systems, pages 183-196, New York, NY, USA, November 2009. ACM Press.

S. R. Madden, M. J. Franklin, J. M. Hellerstein, and W. Hong. TinyDB: an acquisitional query processing system for sensor networks. ACM Trans. Database Syst., 30(1):122-173, 2005.

A. Mainwaring, D. Culler, J. Polastre, R. Szewczyk, and J. Anderson. Wireless sensor networks for habitat monitoring. In WSNA '02: Proceedings of the 1st ACM international workshop on Wireless sensor networks and applications, pages 88-97, New York, NY, USA, 2002. ACM.

G. Mathur, P. Desnoyers, D. Ganesan, and P. Shenoy. Ultra-low Power Data Storage for Sensor Networks. In IPSN '06: Proceedings of the fifth international conference on Information processing in sensor networks, pages 374-381, New York, NY, USA, 2006. ACM.

L. Mottola and G. P. Picco. Logical Neighborhoods: A Programming Abstraction for Wireless Sensor Networks. In Proc. of the Int. Conf. on Distr. Computing in Sensor Systems (DCOSS), 2006.

S. J. Mullender, G. van Rossum, A. S. Tanenbaum, R. van Renesse, and H. van Staveren. Amoeba: A distributed operating system for the 1990s. Computer, 23(5):44-53, 1990.

F. Osterlind, A. Dunkels, J. Eriksson, N. Finne, and T. Voigt. Cross-level Simulation in COOJA. In Proceedings of the European Conference on Wireless Sensor Networks (EWSN), Poster/Demo session, Delft, The Netherlands, Jan. 2007.

K. K. Rachuri, M. Musolesi, C. Mascolo, J. Rentfrow, C. Longworth, and A. Aucinas. EmotionSense: A Mobile Phones based Adaptive Platform for Experimental Social Psychology Research. In Proceedings of 12th ACM International Conference on Ubiquitous Computing (UbiComp ' 10), Copenhagen, Denmark, September 2010. ACM.

A. P. Sample, D. J. Yeager, P. S. Powledge, A. V. Mamishev, and J. R. Smith. Design of an RFID-Based Battery-Free Programmable Sensing Platform. IEEE Transactions on Instrumentation and Measurement, 57(11):2608-2615, November 2008.

N. Vallina-Rodriguez, P. Hui, J. Crowcroft, and A. Rice. Exhausting battery statistics: understanding the energy demands on mobile handsets. In MobiHeld ' 10: Proceedings of the second ACM SIGCOMM workshop on Networking, systems, and applications on mobile handhelds, pages 9-14, New York, NY, USA, 2010. ACM.

M. Welsh and G. Mainland. Programming Sensor Networks Using Abstract Regions. In Proc. of the Symp. on Networked Systems Design and Implementation (NSDI), 2004.

### Summary of the invention

The present invention proposes a new way of looking at a wireless sensor network: treat it as one cooperating system, as opposed to a network of isolated devices.

A sensor network is much more than a bunch of tiny, stand-alone devices logging data, and perhaps delivering them to some central storage. One can envisage these devices, instead, as part of a closely tied system, collaborating seamlessly. The similarity between such a system and an ordinary desktop machine is to be investigated, e.g., when running multiple, parallel processes at the same time. Such a machine is controlled by an operating system, which takes care of the inter-process communication, as well as storage or other I/O services. There is a need to run the sensor network similarly: each process would be "hosted" by a sensor device, while the base station would act as the "kernel" of the system. Similarly to a traditional operating system, processes could seamlessly communicate with each other (i.e. post or accept events to/from each other) and store or retrieve data from some non-volatile storage. The inter-process communication would be handled by a thin layer running on the hosts, communicating wirelessly with the kernel node if necessary, without being exposed to the application. This view was motivated by the fact that in many cases, the sensors do simple tasks, such as reporting their sensor data to the sink, therefore they do not necessarily have to run a complete operating system, and thus putting extra load on their CPUs. Based on these concepts, the present invention introduces OSone, a distributed operating system for sensor networks.

The present invention provides a System for sensing physical or environmental conditions, comprising: a wireless sensor network having a plurality of spatially disseminated independent sensor nodes being responsive to a number of processes for sensing physical or environmental conditions; a system storage providing support for the number of sensing processes; and a distributed operating system comprising a system kernel for managing the wireless sensor network including network and storage management across the sensor nodes, wherein the system kernel is installed on at least one of the sensor nodes.

According to another aspect, the present invention also provides a method for sensing physical or environmental conditions, comprising: providing a wireless sensor network having a plurality of spatially disseminated independent sensor nodes being responsive to a number of processes for sensing physical or environmental conditions; allocating a system storage to provide support for the number of sensing processes; and installing a distributed operating system comprising a system kernel on at least one of the sensor nodes, and managing the wireless sensor network including network and storage management across the sensor nodes by the system kernel.

The system storage and the system kernel are globally accessible for each sensor node via the distributed operating system. Hereinafter they may be also called storage and kernel. The storage and kernel on the senor node will be called node storage and node kernel.

Preferably, the system kernel is replicated on each of the plurality of the sensor nodes and at least one application for performing at least one of the number of processes on the system storage.

Preferably, the system storage is located on at the least one of the sensor nodes and the at least one of the sensor nodes is capable to select a particular sensor node based on a predetermined criteria and to install the at least one application onto the particular sensor node.

Preferably, the predetermined criteria includes that if sensing capability of the particular sensor fulfils the requirement of a particular sensing process to be performed by the at least one application.

Preferably, the system kernel has an inter-process communication layer comprising a communication protocol for communication of a system call requested by the particular sensing process towards the particular sensor nodes.

Preferably, the system further comprises a plurality of drivers installed on the sensor nodes, each driver being a micro kernel providing a basic hardware management of each sensor node, respectively.

Preferably, the system comprises a plurality of applications running on different sensor nodes, and wherein the applications communicate via the distributed operation system.

Preferably, the system further comprises a system cache, and wherein each node is provided with a node cache.

Using these building blocks, complex sensing and control applications can be designed. The system provides the functionalities required by the efficient functioning of the application utilising a system storage and a communication sub-system. The system comprises at least one kernel node managing the network as well as providing storage functionalities. The communication protocol enables neighbouring devices to reliably and efficiently deliver and collect information from the kernel node. The storage system provides a file-system-like interface enabling applications to store and retrieve information. The system manages the underlying infrastructure, hiding the complexity involved in storing and retrieving information, as well as those associated with communication.

The underlying principle of Osone is: it is much easier to manage one operating system running multiple programs, than multiple sensors networked together, each running an operating system, the applications and the numerous protocols required to provide the communication between them. Along with making the system easier to understand, the present invention also made it use less energy, since each sensor does only its designated job without any overhead due to the operating system or networking protocols. The system would perfectly suit future sensor networks, where the actual sensors have even smaller memory and computational power than today's devices - e.g. batteryless devices [24], that scavenge energy from the environment enough only for a few hundred CPU cycles.

To evaluate the system and its implementation concepts, the present invention uses smart home as the application scenario. Nowadays, green homes and energy efficient buildings are not luxurious, but a standard. Environmental safety has turned from million-dollar projects into simple tasks that everyone can do at home, such as turning off unused lights and heating. To facilitate this, sensors are being built into the buildings monitoring environmental conditions, as well as occupancy to make the house context-aware. Many of these sensors only perform simple tasks such as temperature and motion sensing, and hence do not require a complicated operating system. In terms of network management, as all the sensors within a smart home are usually owned by the same family, therefore a centralized control is realistic, appropriated, and even desirable.

### Brief description of figures and tables

The present invention will now be described by means of exemplary embodiment with reference to the figures.
Fig. 1 shows the smart home scenario: light, humidity and motion detectors, and a central base station;
Fig. 2 shows the architecture of a traditional system vis-à-vis that of the present invention;
Fig. 3 show the TDMA protocol example according to the present invention;
Fig. 4 shows the test bed topology based on a ping-test according to an exemplary implementation of the present invention;
Fig. 5 shows the current consumption on the testbed according to the exemplary implementation of the present invention;
Fig. 6 shows the radio duty cycle on the testbed according to the exemplary implementation of the present invention;
Fig. 7 shows the CPU usage (% of time in low-power mode) according to the exemplary implementation of the present invention;
Fig. 8 shows the response time in the simulation according to the exemplary implementation of the present invention;
Fig. 9 shows the response time with different buffer sizes according to the exemplary implementation of the present invention.

### Detailed description of the invention

As introduced in the previously, the present invention abstract away from the traditional way of dealing with WSN. The reason for doing that is because of system utilisation and efficiency. On a traditional WSN, the nodes of the network act as stand-alone, separate entities, responsible for their own duties and managing their own resources. This requires system designers to perceive the system as a complex, distributed, sometimes even competitive set of devices, trying to work together to achieve the goal. Making such a system work requires efficient routing and dissemination protocols, complex storage systems, time management and so on. Although using efficient protocols for each subtask can achieve a relatively energy efficient operation, it remains a complex system with lots of opportunities for bugs and faults. On the other hand, for such systems, the application itself is usually the one getting the least attention, since most of the time is actually spent on optimizing the drivers or the communication layer.

It should be the other way around. System designers should spend most of the time designing the applications (which themselves should be the complex parts of the system), and not worry about the underlying hardware. The most obvious solution is to view the entire WSN as one computer running multiple applications. Although the present invention is targeting a rather simple application - that of a smart home -, the general idea is much greater. The goal is that any (even mobile) WSN acts as a cooperating system, no matter what the application scenario is - now ignoring the difficulties of implementation. By considering the network as one system, it can be moved from thinking about cooperating sensors to cooperating applications. This is an important point, as cooperating applications have very different communication or storage requirements from cooperating sensors. The cooperating applications have inter-process communication instead of a unicast-multicast-broadcast model, and a central file-system type of storage model instead of the distributed, delivery-targeted traditional way.

Along with enabling the design of complex applications, the present invention will also show how such a system can be more efficient than a traditional WSN. The present invention is aimed to move most of the computational complexity from the sensor devices to the central station, thus saving energy on the devices - as shown later, it is possible to have the devices consume 4% of the energy used by the kernel node, and two-thirds of a traditional approach.

The system according to the present invention may be considered to be a middleware over some underlying operating system. However, one of the objects of the present invention is to `replace' the operating system instead of putting something underneath it, thus relieving the already overloaded devices from extra processing and storage overhead. What is more, due to the new way of looking at the system, the present invention also solves issues such as data delivery or time synchronisation: the application simply "saves" the data, or calls the "get_system_time()" function to achieve these, without worrying about the communication details.

### System Architecture

The architecture according to the present invention can both be seen as a distributed system or a centralized one: distributed, since the applications may reside on different physical devices, while a centralized, since everything is controlled and managed by the kernel, just like with any ordinary operating system.

The design decisions were governed by the following: to the application, the system should feel like an operating system. The application should expect services as if it was running on an ordinary desktop machine. It is to be emphasized that the system according to the present invention differs from a traditional operating system in the way of the underlying mechanisms providing the inter-process communication work. In an ordinary operating system, this is usually done by function calls provided by the kernel, while the present invention, the function calls trap into a communication layer forwarding them to the kernel - thus more delay.

It is further to be emphasized that the system according to the present invention is not targeting a specific application, but should be taken as a general platform for any sensor network. The main contribution of the invention is the idea of perceiving and handling the WSN as one system, instead of distributed networked sensors, thus opening up more opportunities for system designers. While the present invention intends to generalize to any system, it also recognizes the challenges associated with different scenarios. For example, the communication layer may require certain adjustment for different scenarios; however the research community should take a step away from the distributed, inter-connected node perception towards a more system-wide view.

The system design according to the preferred embodiment comprises two types of nodes: host nodes and a kernel node. The kernel node is more powerful, and has sufficient amount of memory, while the host nodes are more constrained. Following the operating system example, the kernel node is the one responsible for the management of the system, while the host nodes are the ones running the applications. When an application is installed, the kernel node decides which host node should run the application by matching the requirements of the application and the capabilities of the host nodes - a temperature sensing application requires a sensor. If a match is found, the application is delivered and installed on the given node, without the programmer knowing about it. To the programmer (and to the program), the system must feel as if it was running on one large machine, with all its aspects. For example, if one program needs to notify another, the system must allow this regardless of where the applications are running, physically. Similarly, a store operation must take place no matter how far the device is from the kernel node. Since our vision is to perceive it as an operating system, it needs to satisfy some common requirements. The present invention will briefly address these now:
**Fault tolerance** Let's assume the kernel can take care of most expected system failures. It can detect if an application is stuck in a forbidden state, stop it and remove or replace it. However, most of the attention is on the communication channel between the applications and the kernel. Since, in this case, this will be through wireless medium between, perhaps, opportunistically connected devices (such as smart phones), the system has to be able to deal with this, and provide ways of hiding the delays and disconnections from the application. The present invention achieves this using smart caching and callback, i.e., either by returning the requested value from cache or by asking the application to provide a callback, thus avoiding blocking the application on I/O.
**Atomic Transactions** When an application runs, it runs in its own memory slot, therefore any data in the memory used by an application should only be accessible by that application. Data on non-volatile memory is stored by the kernel. Each piece of data has an owner (an instance of an application); therefore appropriate permissions can be set.
**Deadlocks and concurrency** The system is truly multi-threaded - since each application may run on a different device, they all have a small dedicated physical CPU. Communication between applications or even with the kernel may have some delays, and thus cannot guarantee the order of messages. This needs to be taken into account when designing the application - there is, however, a method to lock a piece of data, so that no other instance of the application can access it, thus avoid inconsistencies. Furthermore, local cache is always synchronized, on best-effort bases, with the kernel to keep the local copy updated.
**Load balancing and resource management** This issue is actually handled very well by the system - since it is the system kernel which decides which application should run on which device based on the requirements of the application, it can optimize for resource usage. If, for instance, there are two devices in the vicinity, both able to perform the same task, the kernel will issue the application to the device with a higher battery capacity (or the better device, based on any metric). This is an advantage of a centralized system.
**Naming and protection** When an instance of an application stores some data, the data is tagged with the ID of the application instance, and thus can be retrieved easily. Ideally, the kernel keeps a filesystem, and applications can store and retrieve files, append to files, and perform other operations. According to a preferred embodiment, the data is serialized and sent it over to the kernel as a stream of bytes. File permissions take care of data security to some extent, while the kernel can monitor the communication between the applications, and block any unpermitted channel - i.e. if an application is not allowed to talk to another.

It is to be noted that a minimized micro-kernel may also be installed on the nodes for basic hardware management of the nodes.

### Smart Home Scenario

The present application has been described above in the general term. Hereinafter it will be explained using an example application scenario: a smart home. A smart home is a sensor-equipped house, where the environment is adjusted to the current context. For example, lights turn on when a person enters the room, the heating turns to standby when everybody leaves the house, etc. As well as making the life of people living in the house easier, it also ensures environmental friendliness - the computer will not forget to turn off the lights or close the windows, thus reducing the carbon footprint of the house.

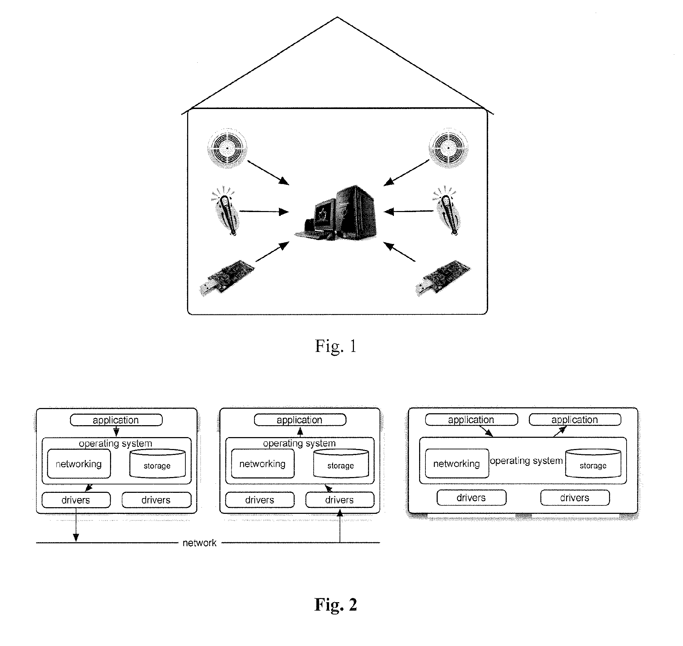

The following exemplary scenario is provided to show the capabilities of the system: imagine a smart-home with tens or perhaps hundreds of sensors deployed, all connected to a central base station. More specifically, there may be motion detectors, temperature and light sensors throughout the house. Such a system is depicted in Figure 1.

This is a highly heterogeneous system, with sensors having different capabilities. If, now, the entire network can be seen as an operating system, the following applications or programs may run: one to monitor any motion in the house, one to report the temperature and one to report the light levels, one to keep the temperature and light levels in the house at desired values, and one to run security and safety monitoring program. When running, the programs cooperate and communicate with each other to perform their associated tasks.

It is important to note that the application scenario should not limit, but rather present the capabilities. It is one of the possible ways of using the system, but the system is not limited to smart-home environments. By designing a different communication scheme, it can be adopted to different scenarios.

### OSone

As described before, the network appears as one operating system, where the user simply installs programs at the base station (as he would on an ordinary desktop machine or a smartphone), and expects the system to work autonomously. Figure 2 shows the main difference between a traditional system and that of the present invention. In a traditional system, when an application wants to send a message to another application running on another sensor node, it needs to ask its operating system to initiate a network link to the node hosting the other application (assuming that it knows which node that is), and send the data. Potentially, there is a storage system on each sensor node to store the data until communication becomes possible. All of these need to be dealt with by the system designer. In the system according to the present invention, the communication happens as an inter-process communication, no knowledge or assumption is required about the underlying network.

Throughout this section, the present application will be explained using the smart home scenario: the three programs running on the sensors to ensure the required operation of the household. To make the design clearer, first, the present invention will give a more detailed description of each program, before going into the details of the underlying system.

The motion detection program, as one might guess, monitors any movement in the house, and informs any other program subscribed to it where movement is detected. Similarly, the temperature and light monitoring programs do the associated tasks, advertising the results to the subscribed programs.

There is a program to keep the temperature and light levels at a user defined level in the house. This is done using the information received from the motion detection program and the light and temperature sensors throughout the house. Similarly, the temperature is maintained at a predefined level during house occupation. The program starts when someone has entered the house (alternatively, of course, it could be started remotely by an SMS), and finishes, when the house becomes empty.

All of the above programs are installed at the kernel node, which then disseminates them to the required hosts automatically. The user needs to install a single temperature monitoring or motion detection program, and the system will make copies and disseminate them to multiple hosts, if required.

The motion detection program would be automatically installed on the motion sensors. The temperature and light monitoring program would be running on the environmental sensors.

The dissemination happens based on the requirements of each program - i.e. if it requires the actual temperature sensor, it will be loaded onto a device with a temperature sensor. If a program does not require access to any physical sensors, it will be run on the central server or the kernel node.

On the other hand, the system is able to put both the temperature monitoring and the light monitoring programs on the same sensor device given it has both physical sensors installed. More details of how the system disseminates programs to the required sensors (or hosts) are described later in the section.

**Host nodes** They should be the small, battery-powered sensor devices equipped with some physical sensors, and have limited memory and computational capacity, and a radio. The idea is that these devices should be relatively cheap, and easy to replace or add to the system - thus the wireless connectivity and the battery power source.

It is important that these devices run energy efficient protocols; otherwise the user needs to change the batteries often, which is not desirable. The main sources of power consumption on today's motes are the radio and the flash memory [19]. Transmitting a byte over the radio or storing it on some external flash memory is on the same order of magnitude in terms of energy usage (around 20 am), therefore the aim is to optimise these operations.

The idea is to have only the very necessary software running on the sensors, thus reducing the processing, storage and communication overhead.

For the system to work there needs to be a thin layer running on the node responsible for the following functions: it needs to be able to post, catch and broadcast events between processes, as well as store and retrieve data. Moreover, it needs to run some basic drivers (CPU, radio and installed sensors) required to operate the mote normally.

To be precise, the layer provides these functions:
- *start_process(pName, data)* and *stop_process(pName)* to start or stop a process with some optional data.
- *post(ev, pName, data)* to post an event to a specific process with some optional data.
- *store_data (sn, data, size)* and *get_data(sn, callback, size)* are used to store a piece of data in the system as well as retrieve it. Each piece of data is stored on the central server, as well as cached locally. Preferably a non-blocking, callback-driven way of retrieving the data is used, as it may take a while for the central server (kernel node) to find and deliver the required piece of data.
- *get_system_time()* to get the system-wade time.
- *sensors_init(sensorType)* to initialize and run sensor drivers installed on the mote.

To implement the above functions, the layer needs to communicate with the kernel node. It needs to keep the local time synchronised, as well as store and retrieve data efficiently. Further, it needs to keep track of the locally running processes, and forward/receive event posts to/from the kernel node. The layer also needs to be able to accept new processes, and start them, along with stopping currently running ones.

The communication protocol relies on an initial stream of broadcast messages for service discovery (these are periodically repeated to make sure the nodes are still alive), as well as reliable unicast messages for data and control messages. Data messages (carrying data being stored or retrieved) are transmitted on a separate channel to avoid interference with other control messages (such as event posts). Hosts only communicate with the kernel node, future versions may allow optimizations where hosts can talk to each other.

The underlying driver fires a motionInterrupt, which is caught by our program, and a motionDetected event is forwarded using our *broadcastEvent(ev, data)* function to notify all the other processes. The *store_data()* function stores a log of the event.

**Kernel Node** The kernel node is the centre of the system. This node should be a more powerful device, e.g., a full computer, with infinite storage as well as computational power. This node is the injection point for new programs, controls the communication between the processes running in the system, and also implements the storage.

When the system starts, all the external nodes start sending their service discovery messages. These contain the capabilities of the host such as installed sensors. The kernel node logs each host with their associated capabilities, and replies to them with a unicast message, assigning each an identifier.

All processes or programs, applications are installed at the kernel node. Part of the installation process is to check the requirements of the application. More precisely, the system is interested in what hardware features the application needs to access. If all, what the application is doing is aggregating incoming data, then it needs to be run on the kernel node. However, if it needs access to temperature sensor, then it needs to be run on a sensor equipped with the necessary parts.

Once a match has been found between an application and a set of nodes, the application is delivered (as a binary image) to those nodes using controlled broadcast messages.

When the nodes receive the entire image, they dynamically load it to their memory, and start the included process. If the kernel node cannot find a matching sensor, an error is thrown.

This node also implements the central storage. Any delivery of data happens on a dedicated channel, as these tend to use up the bandwidth.

### Exemplary implementation details

The system implemented on the Tmote Sky [2] sensor board. It is a widely used development board with a simple CPU, limited amount of memory and a Zigbee-compatible radio. Its features and energy consumption are summarised in Table 1 below. Note, that the energy consumption figures are approximate: in the case of CPU, it depends on the current power-mode; while for the radio, it depends on whether it is transmitting or receiving (although they are very similar); and for the external memory, it also depends on whether it is reading (4 mA) or writing (20 mA).

**Table 1: energy consumption on a Tmote Sky**

| | Type | Approx. energy consumption |
|---|---|---|
| CPU | Msp430 | 5-500 uA |
| Radio | Cc2420 | 20 mA |
| Sensors | SHT11 (temp., humidity, light) | 0 |
| RAM | 48K | 0 |
| ROM | 10K | 0 |
| Non-volatile memory | 1MB | 4-20 mA |

Although it is emphasized that the kernel node can be a more powerful device (or even a desktop machine), in the current exemplary implementation, it is also a Tmote Sky sensor node. For the scenario here and application, a TMote is sufficient. However, the kernel node can be easily deployed on a more powerful device, such as the iMote2 [1]. Here, the Tmote Sky case also provides a lower bound of the system performance and a very realistic view of the system can be obtained by the present invention.

**Process Installation** As described before, the programs are installed at the kernel node. The application needs to be compiled offline as a dynamically loadable ELF file [9] - Executable binary Linked Format, a standard and very flexible format to store compiled objects. This ELF file needs to be sent to the kernel node, which can examine the file, and decide which node to install it on. The applications are tagged by its requirements by the developer (for now), and the kernel node uses these tags to find a suitable host. If it needs to be installed on a set of external nodes, the image is delivered by a series of multicast messages. If a node receives a program that it should run, it calls its elfloader function, which allocates memory, and loads the process. The same function is used to processes from nodes. The elfloader is part of the Contiki operating system.

**Central Storage** The implementation description with the details of the central storage will now be explained. As described before, all the data is stored on the central server, however, this is hidden from the applications - they simply call *store_data(),* and assume it to be available whenever needed.

We split up the main storage into fix-sized chunks (128 bytes), and store each piece of data in these chunks. Every piece of received data is identified by the application ID, and a sequence number sent by that application. The main difficulty is making such a system efficient over a wireless channel: the present invention employs multiple levels of caching to enhance response time to data retrieval. The controller layer running on the host nodes (which essentially first receives the data from the application) assigns the unique identifier to the stream of data, and stores it in its local cache. Once the cache becomes full or after some timeout, the data is serialised, and sent to the kernel node, where it is stored on a non-volatile storage. When an application asks for a piece of data, the local controller checks if it is in its local cache - if so, it returns the data immediately. If not, then it asks the kernel node for the data, and returns to the application when the data arrives. An error is returned if the kernel does not reply, or cannot find the data.

Similarly, there is caching on the kernel nodes: each sensor node is associated with a local cache, where the last-stored data is kept, thus it can avoid spending time reading the non-volatile storage. As storage operations are hidden from the application, the functions should return quickly: i.e. when an application asks for a data, it should receive it rather soon. The more intuitive option is to have the application block until the data arrives, however this is not safe when dealing with wireless communication. Instead, the application is asked to set up a callback function, which is called upon the arrival of the data (either immediately from local cache, or from the kernel node).

*Inter-process communication* Similarly to the storage system, inter-process communication should be hidden from the application. On the sensor nodes, the control layer keeps track of what applications are running on the nodes, as well as a callback function in case the application receives an event. When an application wants to notify another running process, it can post an event. These events can either be defined by the application, or the OS. Along with the event, the application has the option to send a fixed amount of data. The event is caught by the control layer, and forwarded to any local destinations (via the registered callback), as well as sent to the kernel node, which in turn can inform any other destination on remote nodes in the system. The kernel node delivers the event notifications using a multicast message. It is a single broadcast message destined to a set of nodes. Each receiving node checks if it is part of the destination set, and acts accordingly.

**Communication protocol** Since this was the first attempt at solving the problem, some compromises during the implementation period are made. One such compromise was the use of a centralised kernel, able to reach every node in one hop. Future versions may allow multi-hop deliveries. In the present case, if a kernel node cannot reach all of the host nodes, further kernel nodes need to be added to the system. Since the kernel nodes are more powerful, perhaps fully-functioning desktop machines, it is assumed, for now, that they are connected by a backbone network (perhaps an in-house ethernet), and thus can communicate with each other relatively easily. This is a valid, reasonable assumption for the smart-home use-case.

To support the above described functions, a communication stack is required that can provide time-guarantees. It is important to be able to guarantee a reply to, for example, a data retrieve or a process notification. In most cases, a CSMA-based MAC protocol is used to let multiple nodes gain access to the medium, however this is an opportunistic way of sharing the media. The centralised scenario allows the system to use a more-controlled way, e.g. using a TDMA scheme. The time is split up into small time-periods, and each node is assigned one. Since the nodes mostly talk to the kernel node, it will have a higher traffic demand - the scheme allows us to assign multiple slots to the kernel node, so that it can respond quickly to queries, and does not have to wait a full cycle.

For higher layer, reliable data transfers, acknowledgements are required within a set time-interval (usually 1 s), otherwise the packet will time out. Therefore, the present invention chosees to use a rather quick cycle period for the MAC protocol: each host node gets a slot every half a second, while the kernel node has a slot after every host node. In other words, every host node has one slot within a cycle period, while the kernel node has a slot for every host node. This is necessary, since all the communication happens with the kernel node, therefore this node needs to have proportionally more chances to transmit, based on the number of host nodes. Depending on the slot length, a node may have enough time to transmit multiple messages. The present invention also uses buffering on the MAC-layer, in case the node does not have enough time to transmit the packet, it can transmit it in the next cycle.

For the TDMA scheme to work across the system, the nodes need to be synchronised in the order of milliseconds. This is achieved by using a very simple, one-hop time synchronisation protocol, where all the nodes synchronise their local clock with that of the kernel node. It time-stamps every outgoing packet (on the driver level, just before writing the packet in the radio buffer) with its local clock. The receiving node, again, in the driver, just after receiving the packet, checks the time-stamp, subtracts the approximate duration of the message delivery, and compares the time-stamp to its local clock. The difference (i.e. the offset) is added to the local clock, thus accounting for any time-shifts between the kernel node and the node.

As the system has a strict TDMA protocol, there is a good opportunity to duty-cycle the radio on the devices, since the system knows when traffic can be expected. Once the host nodes synchronised their radios with the kernel, they only turn their radios on during their own time-slots (and the consecutive time-slot to listen to possible replies from the kernel), and turn the radios off during other time-slots. This results in great energy savings, e.g., on the host side the hosts are using only 4% of the energy used by the kernel.. The kernel node cannot turn its radio off, since it should always expect traffic. A small optimisation can be to turn off the radio of the kernel node during its own time-slot, when the kernel does not need to reply to any of the host nodes. Note, that the duty-cycle depends on the cycle period and slot times. Depending on the values assigned to these parameters, it may happen that having more nodes results in a better duty-cycle, since a host would be active for a shorter period of time within a cycle.

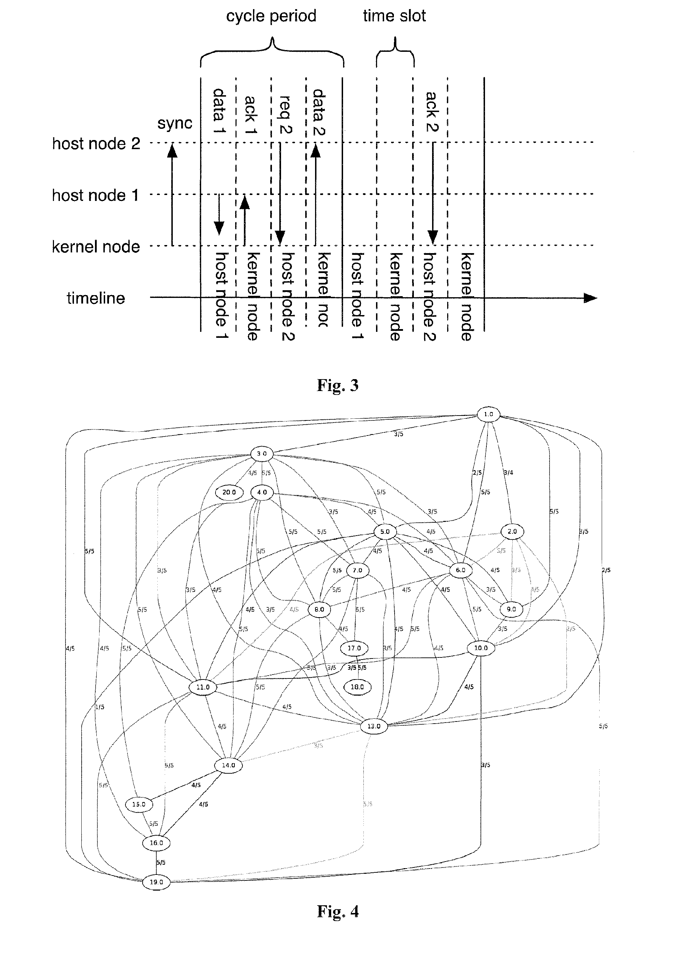

Fig. 3 shows an example of the TDMA scheme with two host nodes and one kernel node. The first message is an explicit synchronisation message broadcast to all nodes. Since there are two host nodes, the cycle is split into 4 slots: one-one slot to the host nodes, and the rest for the kernel node. In this example, host node 1 sends a data message to the kernel, which then sends an acknowledgement back, while host node 2 requests a data packet, which the kernel node delivers, and the host node then acknowledges in the next slot.

Since the nodes need to receive at least one message from the kernel node to synchronise their clocks, there might be collisions occurring until this happens.

There are three types of messages sent by the system: broadcast, multicast and unicast messages. The exemplary implementation uses Contiki's Rime communication stack [8] to implement each type. Broadcast messages are used at boot up time by the host nodes to find the kernel node. Multicast messages are sent by the kernel node to deliver application images as well as event notifications. Unicast messages are used to deliver data both to and from the kernel nodes, as well as initialise the host nodes. All of the unicast messages require an acknowledgement from the receiver, otherwise they time out, and will be re-sent.

### Evaluation

The results of the evaluation based on real sensor motes and in a simulated setting are explained hereinafter. The scalability and efficiency of the system are evaluated using the following metrics:
i) Response time is an important metric for such systems - applications may become stuck if they do not receive a reply for a query. Due to the communication layer implementation, response time may become an issue when the network grows.
ii) Radio dutycycle measures the proportion of time the nodes need to keep their radios on, and thus consuming energy.
iii) Energy consumption logs the energy consumed by the nodes throughout our test runs.
iv) CPU usage shows the amount of time the nodes kept their CPUs active, and how much they could put their CPUs to low-power mode. The TMote platform has an MSP430 CPU, which uses about 500 uA in active mode, and about 50 uA in LPM1 (low-power mode 1). Therefore the more time the nodes can send their CPUs to sleep, the more energy is saved.
v) Memory footprint is based on the proof-of-concept implementation on real, off-the-shelf sensor devices.

The true advantage of the system, that is, the different way of perceiving the sensor network, is difficult to quantify. By simplifying the way the system is controlled and it becomes more efficient energy-wise, while also becoming more powerful in the way the nodes co-operate.

**Static Analysis** Along with the simulations and the real-world evaluation, here the present invention will give some information about the implementation. As described before, the system is implemented in Contiki. The goal was to shrink the code base on the host nodes as much as possible, and move as much as possible to the kernel nodes.

The system is made up of the following components: system drivers such as radio, MCU, serial line; networking such as time synchronisation, TDMA-mac, rime communication stack; and the control layer such as timers, process-control and cache. The system uses the msp430-size application on the compiled image to find the exact size of each component. The results are summarised in Table 2 below. The host node requires about 8K RAM, out of which more than 2K is the radio driver. Purely our system (control layer + TDMA-mac) uses about 4K on the host. This is quite memory efficient, and leaves a lot of room for applications.

**Table 2: the memory requirements of the different units**

| | Host (bytes) | Kernel (bytes) | Traditional (bytes) |
|---|---|---|---|
| Radio driver | 2302 | 2302 | 2302 |
| CPU driver | 626 | 626 | 626 |
| External memory | 0 | 872 | 872 |
| HW & SW timers | 708 | 708 | 708 |
| Serial driver | 332 | 332 | 332 |
| Timesynch | 120 | 120 | 120 |
| TDMA | 906 | 906 | 906 |
| Rime comm stack | 908 | 908 | 908 |
| Buffers | 0 | 6170 | 6170 |
| Control layer | 2954 | 4698 | 0 |
| Neighbour table | 0 | 4254 | 0 |
| Misc | 0 | 0 | 8453 |
| Total | 8826 | 21926 | 21397 |
| Test app | 564 | 564 | 564 |

The kernel node is also implemented on the Tmote Sky platform, using almost 22K RAM. Although this is almost half of the available memory on the mote, the kernel node could be implemented on a much more powerful platform, with more memory available.

The table 2 also shows the memory consumption of the same application running on the unmodified Contiki OS using its filesystem, and a simple code delivery protocol. Misc in the table is associated with these extra functionalities of the OS. Its code size in terms of RAM consumption is slightly less than that of the kernel node. The advantage, however, is not the code size, but rather the energy usage, as shown later in this section.

**Testbed evaluation** The intention of the present invention from the beginning was to design something practical and useful, therefore implementing the system on real sensor motes was one of the objectives of the present invention. To evaluate the system, a simple test application is designed. The application queries the temperature sensor of the device every one seconds, and along with a time-stamp, tries to store it. The devices recorded the time it took to receive the acknowledgement from the kernel node, confirming that the storage was successful. After 10 store instructions, the sensor sent out a process notification, and again, the time to reach the other processes was logged. At the end of the test run, the 10 data points were requested from the storage system, recording the time from the request to the actual arrival of the data points.

The system was evaluated on the University of Bern Testbed using their Testbed Management solution TARWIS, part of the WISEBED project [13]. The testbed contains 20 wirelessly connected TelosB motes which are equivalent to the Berkeley or TMote Sky motes. The layout of the system is shown on Fig. 4. The system allows the upload of a compiled image, and the capture of the output from the motes. Since a centralised system is needed, the system could only use the fully-connected subset of the network, containing 14 nodes.

The system according to the present invention is also compared with a traditional implementation: the same test application is running on standard Contiki, and the radio is dutycycled using the X-MAC protocol [4]. It is a preamble based protocol in which senders indicate their intent to send data by frequently transmitting short wake up messages. Nodes periodically wake up, and if they heard a preamble, indicating a packet is addressed to them, they responded with an acknowledgement. This terminated the wakeup phase and the packet is sent. **Data store and get** The first two functions to test are *store_data(..)* and *retrieve_data(...).* They are rather different in terms of timing requirements. Storing the data does not require any return values - the application can call the function with the data to be stored, and expect the data to be stored on the kernel node at some point. Although the function returns immediately without any return value, the system recorded the time it takes for the data to reach the kernel node, and the acknowledgement to get back to the host according to the communication layer running on the host nodes. Although there is a cache on the host, the communication layer delivers the data as soon as possible to the kernel node in case any other application requires access to it.

Data retrieval is more complex: the application requests the data, and passes a callback function to the communication layer. This callback function is called upon the reception of the data - or if the request times out. There are two cases here: either the data is still in the local cache, in which case the callback function is called, passing the requested data; or the request is forwarded to the kernel node. In the latter case, the host node has to wait for the data, and needs to be able to deal with communication failures.

In both cases, the response times depend on a number of parameters: the number of host nodes in the network and the local buffer size. The first parameter affects the number of slots in a cycle (and thus the slot length) while the second can reduce the amount of transmissions necessary.

**Post event** The *post_event(...)* function is used for inter-process communication. The function does not require any return values, the application can assume that the event is forwarded to the destined process. If the process is located on the local host, that process is called immediately with the event value. In all cases, the event is forwarded to the kernel node in case there are other nodes running the process to be notified. Once the kernel node receives such a notification, it sends one multicast message to deliver the event, thus reducing the delay.

### Results

The response times of the different functions on the testbed are summarised in Table 3 below. All the values are averages over all the hosts, over the multiple calls to the functions. Due to the cycle period being set to half second, it is not surprising that a *store_data(...)* is about 0.3 s (less than a cycle). A store operation takes longer, than a get function, since the later can be served also from the local cache. When the *retrieve_data(..)* values were calculated, the local cache also improved the response times drastically. How the cache influences the responsiveness of the system will be shown later. The *post_event()* function only requires one message to the kernel node, thus can reach the other nodes in the time-slot right after receiving it.

### Table 3

**Table 3: response times of different functions from the evaluation according to the present invention**

| | Response time |
|---|---|
| Store_data(..) | 0.3 s |
| Retrieve data(..) | 0.19 s |
| Post_event(..) | 0.15 s |

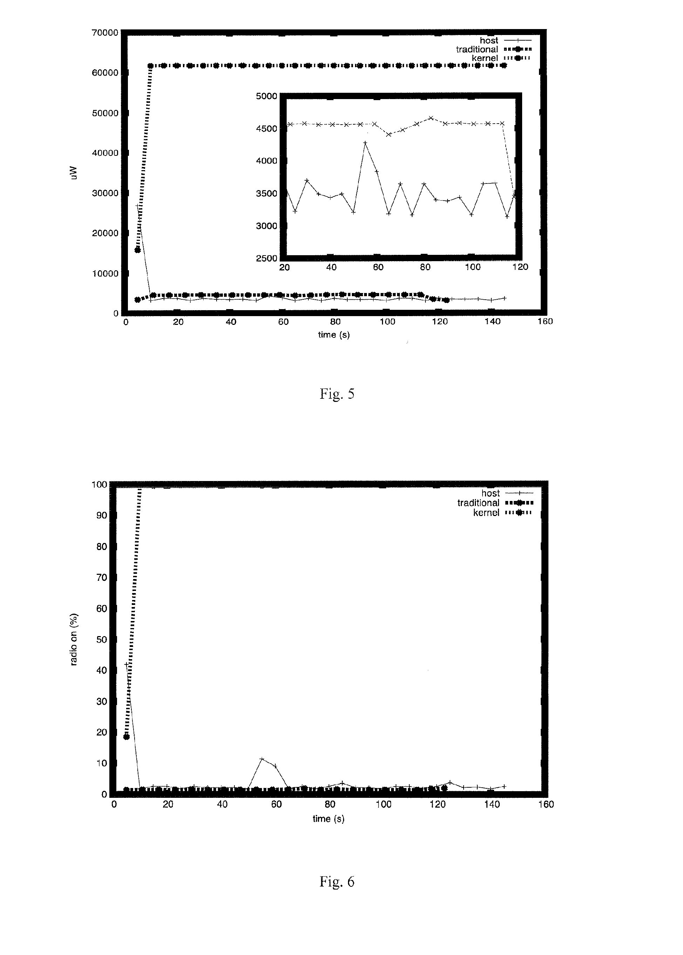

**Power consumption** Along with the test application, the present invention also used Contiki's powertrace [10] feature - this program logs the power consumption of the different hardware pieces on the device, such as the CPU (including the different power modes), memory access, sensor access and radio usage. Fig. 5 shows the current consumption of the host nodes, the kernel node, and the consumption of the traditional approach. The difference in current consumption is substantial: the kernel node needs to be powered up all the time, keeping the radio and the flash in use, while the host nodes are asleep, and only use their radios in their time-slots. The average power consumption of the kernel node was around 62000 uW, while that of the host node was a fraction of this, around 3500 uW - in other words, the host nodes use about 4% of the energy used by the kernel node. Looking at the average power consumption of the traditional implementation, it is about 4500 uW, almost a third more than ours. The host node initially has high power consumption - this is due to the device keeping its radio on all the time until it synchronises its clock with the kernel node, and thus can start the TDMA-protocol. There is also a high peak at around 60 s - this is due to all the hosts changing from "store" mode to "retrieve", and notifying all the other nodes using the post notification, thus creating a high volume of traffic suddenly. It however calms down quickly. The two other, smaller peaks are also caused by transmission failures, and thus retransmissions. This is also visible on the dutycycle graph, shown next.

The kernel node has low initial power consumption because its radio is initially turned off while it initialises the storage system.

**Radio dutycycle** The present invention preferably also logged the amount of time the radios were on, thus testing the communication protocol. The aim was to spend as little energy as possible on the radio, since it is known, with high probability, when transmissions can be expected. Fig. 6 shows the results from the host nodes. As the figure shows, our radio dutycycle was between 1% - 8%, with an average of 2.5%, which is considered very good in such a high-data rate application. Due to X-MAC, the dutycycle of the traditional implementation was around 2%. However the system failed when all of the available nodes of the network are used due to interference and collisions - more than 60% of the messages had to be retransmitted. The reason is that X-MAC is a carrier-sense based protocol, i.e. it cannot guarantee timely delivery, but instead does a best-effort job, and it is very good at keeping the radio dutycycle low.

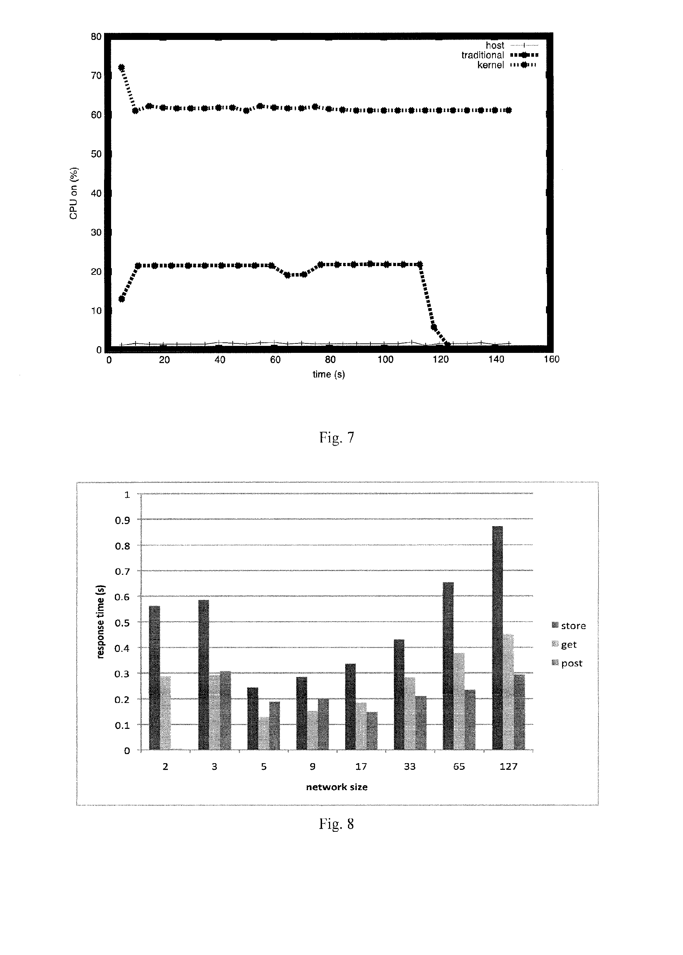

**CPU usage** Another interesting way of looking at power consumption is the CPU usage. Fig. 7 shows the percentage of time the CPU was in active mode - the rest of the time, it went to low-power mode. First of all, it is worth noting that the powertrace application itself uses some CPU time, however, as it was running on all the nodes, it influenced the nodes equally.

Out of the three cases, the kernel node spent the most time using its CPU, while the next one was the traditional implementation. It was a bit surprising as it is expected to use the CPU, but the average was somewhat higher than expected. As it turned out, this was due to the X-MAC keeping the CPU busy - however, it may simply be due to the specific implementation of the protocol. The host nodes could spend the majority of time in low-power mode, thus resulting in lower total power consumption.

From the previous two set of results, the well-known phenomena can also be concurred: radio is the major energy consumer on the sensor nodes. A small improvement on the dutycycle can result in large savings when it comes to energy. Both the traditional and the host nodes consume a fraction of the energy consumed by the kernel node, since their radio has a very low dutycycle (it is only on about 2% of the time). It is also interesting that the host node uses its CPU much less than the traditional approach, i.e. 1.5 % against 20%, see Fig. 7, and this results in almost 50% energy savings (Fig. 5).

### Simulation

Although the testbed had relatively many nodes, considering the application scenario, it is desired to find out how far the system pushed in terms of scalability with the use of a networking simulator. For the simulation, COOJA [22] is used, Contiki's cross platform networking simulator. One of the features of COOJA is to import compiled binary images. In the present case, the code for the Tmote platform is compiled, and the same code is imported into COOJA, which was installed on the actual nodes.

The number of nodes deployed randomly in a fixed-size area is varied - the network size ranges from 2 to 128. The radio range was fixed so that all the nodes could see every other node. The cycle period of the MAC protocol is set to half a second. The time it takes for each function call to return to the application is logged, as well as the energy consumption of each node. The cycle period is an important parameter since each host node has one slot in a cycle, though can possibly send multiple messages within one slot, depending on the length of the slot. When reliable communication is required between the host and the kernel, there are at least 3 message exchanges, i.e., request, reply and ack, requiring at least one cycle period, i.e. the time period for the TDMA-protocol to assign the slot for the host again.

### Results

Fig. 8 shows the time it took for the three different functions to return to the caller for the different network sizes. When there are very few nodes, the response time is dictated by the cycle period, e.g., 0.5 s - even if there are few nodes, they have to wait idle for the next cycle to reply to a message. On the other hand, the protocol works well for the expected number of nodes, e.g., tens of nodes. When there are more than 100 nodes, the congestion becomes a problem, and the base station has a hard time keeping up with the requests within the short slot durations. When the expected number of nodes is higher than 100, the cycle period should be increased to give more time to the base station. Note, that even for 128 nodes, the response time is within 1 s, which is tolerable in the scenario.

In all cases, the store operation takes the longest. The charts show the time it takes to receive an acknowledgement from the store operation. The get function is quicker, as the local cache speeds up the response time. Post operation is generally the quickest, since the kernel node can notify the other nodes right after receiving the notification message. In some cases, e.g., for small network sizes, the get operation is quicker as a result of the cache being more influential to the response times as the delay due to network contention. For the 2 node case, the post gets delivered locally, i.e., the kernel does not have to notify any other node, therefore there is no delay.

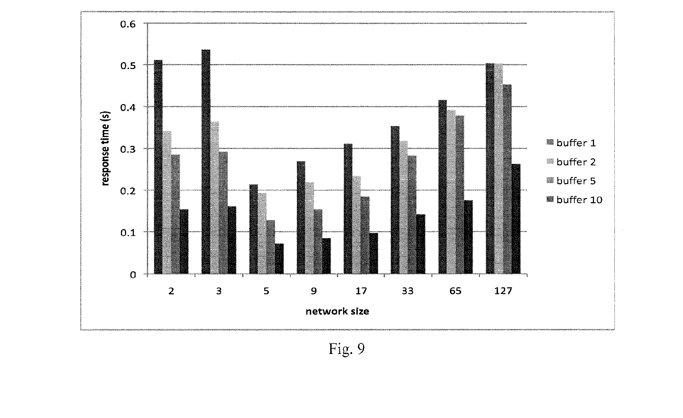

Fig. 9 shows the response times of the retrieve_data (...) function for different network sizes, and varying buffer sizes. The different buffer sizes show how many data chunks the node can hold locally. Intuitively, if the buffer size is decreased, the system will take longer to get the data, while increasing the buffer size results in shorter response times. In fact, this is what the simulations show. Therefore, the buffer size should be set based on the capabilities of the devices. In terms of energy usage, different buffer sizes do not make any difference, as the host nodes synchronise their buffers with the kernel node, regardless of its size - thus, the number of transmissions always equals to the amount of data being stored or retrieved.

### Related Works

Research on traditional, distributed operating systems dates back to the 80's, while the first successful distributed operating system for traditional computers was introduced in the early 90's [21]. Amoeba is an object-based, client-server type of system. Each object can be seen as a process, and they are identified by capabilities ensuring protection. Objects communicate via RPCs, and the system stays hidden from application programmers. The present invention tries to hide the underlying communication from the user, while providing similar functionalities to Amoeba. As Amoeba was designed for traditional systems, they put less emphasis on being energy efficient, and dealing with limited resources or bandwidth. Research did not stop at Amoeba, and the area of distributed operating systems is nicely summarised in [6].

Sensor Network Services Platform (SNSP) [12] is a distributed operating system tailored for sensor networks based on a service-oriented model. Their focus is on resource allocation and content replication: given a process with its requirements, the system tries to find optimal place(s) to execute it in order to ensure reliability and availability. They do not deal with file systems, or inter-process communication.

BarrelFish [3] relates to a distributed operating system for multicore architectures. In their model, they treat the machine as a network of independent cores, where these cores communicate via message passing. Although the research domains in the present invention are very different, the perspective of splitting up the operating system - while hiding this from the application - is similar.

Another interesting work is ErdOS [25]: it is a distributed operating system for sharing resources on mobile handsets. The operating system is context aware, and tries to adopt to the user and its social group. The work is in a sense that resource usage is spread around the network, however, the present invention provides much lower level operating system functionalities to applications, instead of ErdOS's access to remote devices. They also have a different management system: distributed, opportunistic, instead of the centralised one in the present invention.

describes a distributed system for code offloading to improve energy efficiency for smartphones. It is related, in a way, the present invention, as the present invention is also moving processing from the resource-constrained host nodes to the powerful kernel node, and thus reduce the total power consumption of the system.

There are several middleware approaches such as Logical Neighborhood [20] which provides a way to define a set of sensors performing a certain task or running certain programs. Instead of specifically addressing the nodes, they let the user define some rules according to which the target set is selected. In some ways, this could be seen as a distributed system, however, instead of shrinking the code size, and simplifying the communication between the nodes, it introduces complexity in the underlying system.

Abstract Regions [26] could also be seen as an 'abstract operating system'. For example, an abstract region would be the set of nodes within 1 radio hops. It is then possible to share or aggregate data within a region, allowing the programmer to avoid dealing with the low-level peculiarities of the sensors. However, the present invention provides low-level operating system functions to the applications as well as an interface to the sensors, as what Abstract Region was designed for.

In some sense, TinyDB [17] or Directed Diffusion [14] can also be seen as specialized distributed systems. Both are designed for data collection: some query is injected at the base station, efficiently disseminated to the nodes of interest, and the results are routed back to the base station. The system according to the present invention is simpler than these: every node is directly connected to a kernel node controlling it. If this requirement is relaxed, more complexity on the host nodes could have been introduced which is, however, against the desire to keep them as simple as possible.

### Future works and optimisations

The system implementation described in the present invention is the first attempt at tackling the problem, and thus contains some simplifications.

One of the current implementation limitations is that the kernel node is in reach of all the other host nodes. This was necessary to guarantee quick response times to system calls, and keep the hosts free of any extra work. As stated before, if the system is to expand beyond the communication range of the kernel node, further kernel nodes would need to be placed to cover the area. Such kernel nodes can be, for example, easily plugged into a wall socket, as they are envisaged to be desktop machines, or connect to a WiFi link if they are mobile phones or laptops, and thus can communicate without much extra time overhead. Alternatively, they can have more powerful radios, and communicate via a dedicated channel. However, a necessary communication protocol design is required to ensure efficient data exchange between the kernels. The kernel nodes would need to be able to access each other' storage space, as well as notifying each other of process notifications.

The other solution to the scalability problem is to have multi-hop communication between the hosts and the kernel. This solution has the extra complexity in the TDMA protocol, and processing and memory overhead on the host nodes. In the current implementation of the present invention, the host nodes use 4% of the energy used by the kernel nodes. If they have to be listening to other host nodes, this advantage cannot be obtained in the other solution.

Another improvement may be pursuing in on the implementation of the communication protocol. Although the current communication protocol works efficiently, and is able to duty-cycle the nodes, for now, it is not able to dynamically adjust its parameters such as cycle period and slot size to the size of the network. Such could be achieved by having a dedicated timeslot for control messages, when all the nodes could request a slot in the next timecycle. This way, only nodes that are around, and are expecting to send data would use keep their radios on. This is somewhat similar to the way 802.11 base-stations assign timeslots to clients. Such an improvement may be included in the implementation. Note, however, that in the exemplary scenario, it is not expected the size of the network to change frequently.

To further optimise the storage system, a file system running underneath the network may be useful. In this case, the host nodes could simply append data to files, instead of sending streams of bytes, identified by a simple tag. In theory, any sort of file system would be sufficient, as long as the kernel node can uniquely identify every piece of data stored. The host id and the data sequence number may be used to identify received data. It is also possible for different programs to access each other's data, thus efficiently sharing information. Implementation of any permission control could also be an important consideration for the systems.

A different issue, that of reprogramming and application installation can also be further improved. In the current implementation, applications are installed on nodes based in statically defined properties, i.e., the application needs to be tagged with information about its requirements: what kind of sensors it needs access to, etc. Further, applications cannot be taken apart. For example if an application requires access to multiple sensors not present on any device together, the application cannot yet be partitioned to have each sub-application run on the associated hardware. Both could be achieved with a smart compiler and software installation module.

In order to support more platforms and make the system easily deployable in each smart home with heterogeneous devices, the codes on the current kernel node may be ported to laptops and Android smartphones, and extensive measurement and evaluation in a smart home environment may also be performed.

### Conclusion

In the present invention, OSone, a distributed operating system is introduced. One contribution of the invention is the different way of looking at a sensor network: considering it one system helps designers produce more efficient and powerful applications, and do not have to spend the majority of their time optimising their application for the underlying operating system. The design of the architecture is described as well as how it could be implemented on a well-known sensor platform for the smart-home application scenario is also illustrated. The system is quantitatively evaluated, and shown to be both energy and memory efficient, while staying responsive even as the network size grows.

The present invention has now been described with reference to several embodiments thereof. The foregoing detailed description and examples have been given for clarity of understanding only. No unnecessary limitations are to be understood therefrom. It will be apparent to those skilled in the art that many changes can be made in the embodiments described without departing from scope of the present invention. In particular, although features and elements of the present invention are described in the preferred embodiments in particular combinations, each feature or element can be used alone without the other features and elements of the preferred embodiments or in various combinations with or without other features and elements of the invention. Therefore, the scope of the present invention should not be limited to the methods and systems described herein, but only by the language of the claims and the equivalents of those methods and systems.

## Claims

1. System for sensing physical or environmental conditions, comprising:
a wireless sensor network having a plurality of spatially disseminated independent sensor nodes being responsive to a number of processes for sensing physical or environmental conditions;
a system storage providing support for the number of sensing processes; and
a distributed operating system comprising a system kernel for managing the wireless sensor network including network and storage management across the sensor nodes, wherein the system kernel is installed on at least one of the sensor nodes.

2. System according to claim 1, wherein the system kernel is replicated on each of the plurality of the sensor nodes, and wherein at least one application for performing at least one of the number of processes on the system storage.

3. System according to one of the preceding claims, wherein the system storage is located on at the least one of the sensor nodes, and wherein the at least one of the sensor nodes is capable to select a particular sensor node based on a predetermined criteria and to install the at least one application onto the particular sensor node.

4. System according to claim 3, wherein the predetermined criteria includes that if sensing capability of the particular sensor fulfils the requirement of a particular sensing process to be performed by the at least one application.

5. System according to claim 4, wherein the system kernel comprises an inter-process communication layer comprising a communication protocol for communication of a system call requested by the particular sensing process towards the particular sensor nodes.

6. System according to one of the preceding claims, wherein the system further comprises a plurality of drivers installed on the sensor nodes, each driver being a micro kernel providing a basic hardware management of each sensor node, respectively.

7. System according to one of the preceding claims, wherein the system comprises a plurality of applications running on different sensor nodes, and wherein the applications communicate via the distributed operation system.

8. System according to one of the preceding claims, wherein the system further comprises a system cache, and wherein each node is provided with a node cache.

9. Method for sensing physical or environmental conditions, comprising:
providing a wireless sensor network having a plurality of spatially disseminated independent sensor nodes being responsive to a number of processes for sensing physical or environmental conditions;
allocating a system storage to provide support for the number of sensing processes;
and
installing a distributed operating system comprising a system kernel on at least one of the sensor nodes, and managing the wireless sensor network including network and storage management across the sensor nodes by the system kernel.

10. Method according to claim 9, further comprising the steps of: replicating the system kernel on each of the plurality of the sensor nodes, and installing at least one application for performing at least one of the number of processes onto the system storage.

11. Method according to one of claim 9 to 10, further comprises the steps of: allocating the system storage on at the least one of the sensor nodes, selecting a particular sensor node by the at least one of the sensor nodes based on a predetermined criteria, and installing the at least one application onto the particular sensor node.

12. System according to one of claim 9 to 11, wherein the system kernel comprises an inter-process communication layer for communication of a system call requested by the particular sensing process towards the particular sensor nodes.

13. System according to one of claim 9 to 12, further comprises steps of: installing a plurality of drivers onto the sensor nodes, wherein each driver being a micro kernel providing a basic hardware management of each sensor node, respectively.

14. System according to one of the preceding claims, further comprises the steps of: running a plurality of applications on different sensor nodes, and wherein the applications communicate via the distributed operation system.
